# EUROPEAN PATENT SPECIFICATION

(11) **EP 3 786 995 B1**
(45) Date of publication and mention of the grant of the patent: **28.12.2022**
(21) Application number: 19194900.7
(22) Date of filing: 02.09.2019
(51) Int. Cl.: H01G 11/48, H01G 11/86, H01M 4/60, H01G 11/02

(54) **PACA:PEDOT ELECTRODE MATERIALS**
PACA:PEDOT-ELEKTRODENMATERIALIEN
MATÉRIAUX D'ÉLECTRODE PACA:PEDOT

(43) Date of publication of application: 03.03.2021
(73) Proprietor: Ligna Energy AB, 602 21 Norrköping (SE)
(72) Inventor: Inganäs, Olle, 582 46 Linköping (SE); Ajjan, Nadia, 602 47 Norrköping (SE)
(74) Representative: AWA Sweden AB

(56) References cited:
- EP-A1- 2 128 121
- WO-A1-2014/067574
- WO-A1-2015/023974
- WO-A1-2019/113707
- JP-A- 2001 338 846
- JP-A- 2007 123 315
- US-A1- 2014 211 370
- NAOI K ET AL: "ELECTROCHEMISTRY OF POLY(1,5-DIAMINOANTRAQUINONE) AND ITS APPLICATION IN ELECTROCHEMICAL CAPACITOR MATERIALS", JOURNAL OF THE ELECTROCHEMICAL SOCIETY, ELECTROCHEMICAL SOCIETY, US, vol. 147, no. 2, 1 January 2000 (2000-01-01), pages 420-426, XP002906767, ISSN: 0013-4651, DOI: 10.1149/1.1393212

## Description

### Technical field

The present invention relates to a conducting hybrid polymer material comprising a mixture of poly(1-amino-5-chloroanthraquinone) and PEDOT; a process for producing a conducting hybrid polymer material comprising a mixture of poly(1-amino-5-chloroanthraquinone) and PEDOT; and an electrode material comprising a conducting hybrid polymer material

### Background

The demand for tailor-made and high-performing energy storage devices has triggered the development of new electrodes with high energyand power density, long-term cycling stability and low environmental impact. Organic electrode materials exhibit good electrochemical performance, have favourable characteristics possible to achieve via multifaceted synthetic pathways, are abundant and also relatively inexpensive to produce and process. Thus, they have been rapidly developed in recent years as a new versatile platform for a wide variety of different energy storage devices such as supercapacitors, and for lithium-ion, sodium-ion and multivalent-ion-based batteries.

Conducting polymers are attractive as electrode materials due to their intrinsic conductivity in combination with reversible redox activity. However, the charge capacity of conducting polymers is usually relatively low because of charge repulsion from delocalized polarons and bipolarons on the polymer backbone and voluminous monomer units. This combined drawback effect is relatively pronounced for poly(3,4-ethylenedioxythiophene) (PEDOT). Nevertheless, PEDOT has been widely studied as the supercapacitor electrode material because it can work in a comparatively wider potential window and due to its high chemical stability in different environments. In order to enhance the charge-storing response of PEDOT, amalgamation with conjugated redox carbonyl-polymers containing for instance quinones, imides, and/or active phenols functional groups that provide multi-electron redox reactions, have been investigated to achieve rapid and reversible electrochemistry. These conjugated redox polymers offer advantages by improving charge storage capacity and long-term stability by avoiding dissolution into electrolytes, which could cause a decrease of the rate performance and cyclic stability.

However, such electrodes generally exhibit disadvantageous characteristics related to charge and discharge, as well as related to specific capacitance. Therefore, there is a need in the art for improved hybrid polymers.

WO 2012053474 discloses an example of a conductive composition that contains a substituted polythiophene, sulfur trioxide complex as a dopant, further dopants may include quinones such as anthraquinone or chloroanthraquinone.

An example of a conductive polymer material based on a poly-aminoanthraquinone is described by K. Naoi et al. in "Electrochemistry of poly(1,5-diaminoanthraquinone) and its application in electrochemical capacitor materials" Journal of the Electrochemical Society, 147(2), pages 420-426, February 2000.

### Summary

An object of the present invention is therefore to provide a novel hybrid polymer having improved electronic properties which makes it suitable for use as an electrode material in various electrochemical applications. The present invention provides a conducting hybrid polymer material according to claim 1 and a process according to claim 7 for producing a conducting hybrid polymer material. Embodiments of the invention are set forth with the appended dependent claims. These

and other objects, which are apparent to a person skilled in the art in view of the appended claims, are accomplished by a polymer composite material comprising a mixture of poly(1-amino-5-chloroanthraquinone) (PACA) and poly(3,4-ethylenedioxythiophene) (PEDOT), wherein the ratio of PACA to PEDOT in said mixture is at least 4 to 1, as measured by ¹H NMR.

The inventors have found that a polymer composite material comprising a mixture of PACA and PEDOT provides morphological and electrochemical characteristics showing excellent charging/discharging properties that give rise to a high specific capacitance, a high redox potential and good cyclability. The incorporation of PACA into the PEDOT polymer matrix results in a microporous and well complexed polymer material system. These features are favorable for the combined rapid redox charging and high charge storage capacity, features that outperform the properties of the electroactive polymers PACA and PEDOT when examined separately. The mixture of PACA and PEDOT provides synergistic effects between the versatility of the quinone groups in PACA allowing high amount of electric charge storage via Faradaic reactions and PEDOT serving as an electronic conductor allowing easy access to an abundance of redox-active sites. Therefore, the inventive conductive hybrid polymer material provides properties which makes it an advantageous electrode material in various electrochemical applications.

Herein, the term "hybrid polymer material" refers to a polymer material comprising a mixture of at least two different polymers. The mixture is preferably homogenous. The hybrid polymer material may also be referred to as a polymer blend. In a sense, hybrid polymer materials are analogous to metal alloys, in that at least two polymers are blended together to create a new material with different physical properties. Herein, the mixture is formed mainly due to electrostatic interaction between PACA and PEDOT. The inventive conducting hybrid polymer material may be referred to as "PACA-PEDOT".

The polymer hybrid material comprises a porous morphology, which can be shown using scanning electron microscopy. Preferably, the porous morphology is microporous, which yields a high internal surface area. A high internal surface area and microstructure promote fast combined ion-electron charge transport within the redox-active material. The material is typically water-dispersible.

The ratio of PACA to PEDOT has been found to be at least 4 to 1, such as preferably in the range of 4-10 to 1, more preferably in the range of 5-7:1, such as around 6 to 1, as calculated based on measurements by ¹ H NMR. Such calculations can be performed by comparing the signals associated with protons on the PACA with the signal associated to the ethylene bridge protons on the PEDOT.

The PACA-PEDOT can be obtained by polymerizing PEDOT in the presence of PACA, as described below.

In some embodiments, said hybrid polymer material comprises a homogenous distribution of sulfur, chloride and nitrogen throughout the material. A homogenous distribution is indicative of a succesful complexation of PACA-PEDOT. A homogenous distribution may be shown by Energy Dispersive X-ray Detection EDX, for example by analysing the elemental distribution of S, CI and N in the sample. If an EDX image is divided into four equally large quadrants, and each quadrant contains an amount of each of S, CI and N of at least 1 %, respectively, the distribution can be considered homogenous. Preferably, each quadrant may contain 1-3 % S, 6-10 % CI and 2-4 % N. XPS may also be used to show measure the distribution of the above elements.

The atomic concentrations of S, CI and N in the inventive material may be about 2%, 8%, and 3%, respectively.

In some embodiments, said conducting hybrid polymer material has a specific capatitance of at least 550 F/g, such as in the range of 550-650 F/g. Such values are greater than the values reported in literature for comparable hybrid polymer materials.The porous morphology is furthermore advantageous for rapid redox-charging due to the relatively higher surface area which then contributes to a higher resulting specific capacitance

In some embodiments, the ratio of PACA to PEDOT is in the range of 5-7 to 1, such as around 6 to 1, as calculated based on measurements by ¹H NMR. By comparing the resonances of a PACA:PEDOT the ratio between PACA and PEDOT can be calculated.

In some examples, the charging capacity of the hybrid polymer material is at least 180 mA h g⁻¹, such as at least 190 mA h g⁻¹, preferably around 198 mA h g⁻¹.

Another object of the present invention is to provide an electrode material according to claim 6 and comprising the above-described conducting conducting hybrid polymer material. The above-described conducting polymer exhibits excellent charging/discharging properties that give rise to a high specific capacitance of at least 594 F g⁻¹, a high redox potential and good cyclability which makes it suitable as an electrode material in electrochemical applications.

Yet another object of the present invention is to provide a process according to claim 7 for producing a polymer composite material, wherein said material comprises a mixture of polymerized 1-amino-5-chloroanthraquinone (PACA) and polymerized 3,4-ethylenedioxythiophene (PEDOT). This and the above-mentioned objects of the invention are accomplished by a process for producing a polymer composite material comprising a mixture of poly(1-amino-5-chloroanthraquinone) and poly(3,4-ethylenedioxythiophene), said process comprising
a) providing 1-amino-5-chloroanthraquinone monomer;
b) polymerizing said 1-amino-5- chloroanthraquinone monomer, to form poly(1-amino-5-chloroanthraquinone);
c) providing 3,4-ethylenedioxythiophene monomer;
d) polymerizing said 3,4-ethylenedioxythiophene in the presence of said poly(1-amino-5-chloroanthraquinone), thereby forming a polymer material comprising a mixture of poly(1-amino-5-chloroanthraquinone) and poly(3,4-ethylenedioxythiophene).

The inventive concept thus also provides a two-step synthetic procedure to manufacture the above-described PACA-PEDOT. The inventors have found that by polymerizing EDOT 3,4-ethylenedioxythiophene monomer in the presence of polymerized poly(1-amino-5-chloroanthraquinone), a conducting hybrid polymer material as described above can be formed. The inventive process may be performed at ambient (room) temperature.

The polymerization in b) is preferably driven via chemical oxidative polymerization of 1-amino-5-chloroanthraquinone (ACA) monomer in the presence of an organic solvent and aqueous acid medium, such as o-dichlorobenzene, and using an oxidant, preferably potassium chromate. Chemical oxidative polymerization is known to the skilled person in the art.

The polymerization d) is preferably driven via chemical oxidative polymerization of 3,4-ethylenedioxythiophene (EDOT), in aqueous media, taking place in the presence of the previously formed PACA polymer by using a catalyst, such as iron (III) chloride, and an oxidant, such as sodium persulfate, at room temperature.

In some embodiments, the polymerization in b) is performed in the presence of an oxidant, preferably an alkali metal chromate, such as potassium chromate.

In some embodiments, the polymerization in d) is performed in the presence of a metal chloride catalyst and an oxidant. The oxidant may be an alkali metal sulfate, such as sodium persulfate. The metal chloride catalyst may be iron(III)chloride.

In some embodiments, the process further comprises e) isolating the hybrid polymer material. The isolating can be performed using means for separation known to a skilled person in the art, for example by centrifugation.

In some embodiments, the polymerizing in b) is performed in the presence of an aqeuous acid solution and an organic solvent, such as o-dichlorobenzene.

In some embodiments the oxidant of step a) is potassium chromate and the aqueous acid solution and an organic solvent is o-dichlobenzenze; and the catalyst of step d) is iron (III) chloride and the oxidant is sodium persulfate.

### Brief description of the drawings

The above objects, as well as other apparent objects of the invention will now be described with reference to the following detailed description and drawings, wherein
Fig. 1 shows a reaction scheme according to an embodiment of the inventive process.
Fig. 2 shows a ¹H NMR spectrum of a conductive hybrid polymer according to some embodiments of the invention.
Fig. 3 shows a scanning electron microscopy imaging of PACA-PEDOT according to embodiments of the invention.
Figs. 4a and b shows optical microscopy images of drop casted film of PACA-PEDOT according to embodiments of the present invention.
Fig. 5a-c shows EDX of drop casted film of PACA-PEDOT according to embodiments of the present invention.
Fig. 6a shows cyclic voltammetry of PACA-PEDOT according to embodiments of the present invention, at different scan rates from 10 to 100 mV s⁻¹.
Fig. 6b shows cyclic voltammetry of PACA-PEDOT according to embodiments of the present invention, at different potential ranges; in 0.1 M HClO₄.
Fig. 7a shows cyclic voltammetry of PACA at different scan rates from 10 to 100 mV s^{-1,} in 0.1 m HClO₄.
Fig. 7b shows galvanostatic discharge profiles of PACA at different discharging rates from 0.5 to 1 A g⁻¹.
Fig. 8 shows galvanostatic charge-discharge profiles of PACA-PEDOT according to embodiments of the present invention, at different discharging rates from 1 to 16 A g⁻¹.
Fig 9a shows galvanostatic discharge profiles of PACA-PEDOT according to embodiments of the present invention, at different discharging rates from 1 to 16 A g⁻¹.
Fig. 9b shows a Ragone Plot of PACA-PEDOT according to embodiments of the present invention, at different discharging rates from 1 to 16 A g⁻¹.
Fig. 9c shows self discharge of PACA-PEDOT according to embodiments of the present invention.

### Detailed description

### Examples

### Materials

3,4-ethylenedioxythiophene (EDOT, 99%, Acros organics), sodium persulfate (Na₂S₂O₈), iron (III) chloride (FeCl₃), acetonitrile (MeCN) and perchloric acid (HClO₄), 1-amino-5-chloroanthraquinone (ACA), potassium chromate (K₂CrO₄), o-dichlorobenzene (C₆H₄Cl₂), N-methy1-2-pyrrolidone (NMP) (Sigma-Aldrich). All reagents and solvents were used as received. The aqueous solutions were prepared with ultrapure deionized water (Millipore).

### Synthesis of PACA:PEDOT

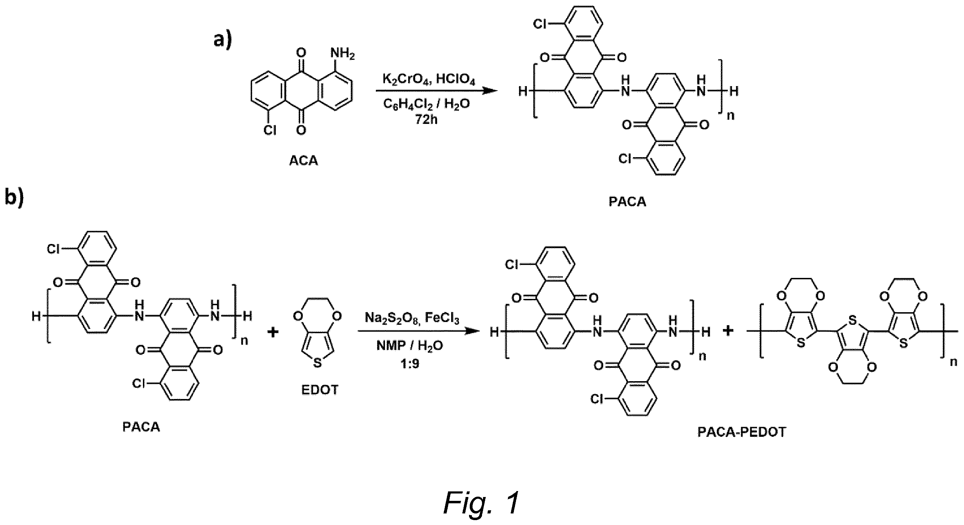

The synthesis of PACA-PEDOT was carried out in two-step chemical oxidative polymerization. Firstly, the polymerization of amino-5-chloroanthraquinone (ACA), monomer for the synthesis of the PACA was carried out by following this procedure: ACA (5 mmol) and 70 % HClO₄ (8.8 mmol) were added to 30 mL of C₆H₄Cl₂ in a 100 mL conical flask in a water bath at 30 °C and then stirred vigorously for 20 min. An oxidant solution was prepared separately by dissolving the oxidant K₂CrO₄ (10 mmol) in 5ml of distilled water at 30°C. The ACA monomer solution was then treated with the oxidant solution in one portion. The reaction mixture was magnetically and continuously stirred for 72 h at 30°C. PACA polymer was isolated from the reaction mixture by centrifugation and washed with an excess of distilled water and ethanol to remove the residual oxidant, remaining monomer, and oligomers. The PACA polymer was dried at 60 °C in the oven for 2 days. Secondly, the polymerization of 3,4-ethylenedioxythiophene (EDOT), in the presence of PACA (weight ratio of 1:1 PACA:EDOT) was carried out in a solvent mixture of 9:1 deionized water: N-methyl-2-pyrrolidone (NMP) respectively, under ambient conditions. PACA was dissolved in NMP and then deionized water was added dropwise to this solution, continuing with the addition of EDOT under stirring. An oxidant solution was prepared separately by dissolving the oxidant Na₂S₂O₈ (1.6 equivalents) and FeCl₃ (1.6 equivalents). The oxidative polymerization was carried out under mechanical stirring at r.t. for 24 h. Finally, the obtained hybrid polymer material was dialyzed for 72 hours using a 3.5-5 kD membrane and isolated by centrifugation. The overall yield of the polymerization was 75%. A possible reaction scheme is illustrated in Fig. 1.

### Electrochemical Characterization

Electrochemical Measurements-Three-Electrode Configuration: CV, and GCD tests were recorded using Autolab PGStat 10 (Eco Chemie, the Netherlands). In the three-electrode system, platinum wire, and Ag/AgCl (KCI sat.) and gold electrode (Au, with an area of 1.0 cm²) were used as counter (CE), reference (RE), and working electrodes, respectively (Bioanalytical Systems Inc. USA). The masses of the drop casted films were weighed using a microanalytical balance with mass of 580 µg cm⁻². All of the electrochemical measurements were performed using freshly prepared 0.1 M HClO₄ aqueous solution as electrolyte.

### Material Characterization

¹H-NMR analysis was recorded at 300 MHz using deuterated dimethyl sulfoxide (CD₃)₂SO) as solvent on a Varian Oxford 300 MHz spectrometer using internal solvent peaks as reference. NMR FID files were processed with MestReNova v12.04-22023, ^{©} 2018 Mestrelab Research S.L. X-ray photoelectron spectroscopy (XPS) spectra were recorded with a Scienta-200 hemispherical analyzer.

Scanning Electron Microscopy (SEM) and Energy Dispersive X-ray Detection (EDX) were obtained using a Zeiss Leo 1550 Gemini Scanning Electron Microscope with an acceleration voltage of 3 kV.

Spray Coated Samples: all devices were fabricated on glass substrates cleaned sequentially in acetone, and isopropanol, drying with nitrogen flow. 3 nm Cr and 20 nm of Au were thermally evaporated on the substrates defining a geometry of two separate electrodes (L/W = 0.5 mm/15 mm). PACA-PEDOT water dispersion was stirred before deposition and spay-coated by means of a commercially available air brush on top of the substrates kept at 150 °C on a hotplate. Sheet resistances were measured with Keithley 4200 using 4-point resistance probe (Signatone S-302). The Seebeck coefficients of the spray coated films were measured applying a temperature gradient (ΔT) across the sample fixed by two Peltier modules. The thermal voltage (ΔV) was probed between two separate gold electrodes (L/W = 0.5 mm/15 mm). The Seebeck coefficient was obtained from the slope of ΔV measured at six different ΔT values.

### Results

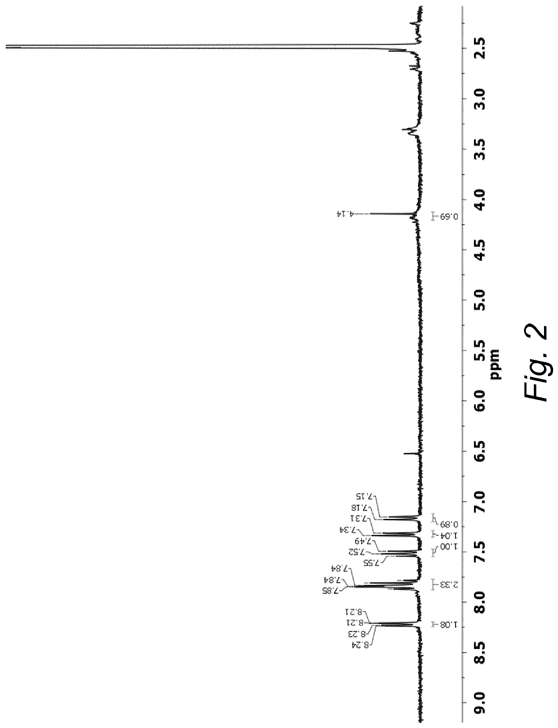

The ¹H NMR spectrum of the resulting hybrid polymer shows signals at δ 7.16, 7.33, 7.52, 7.84, and 8.22 ppm that are attributed to the protons on the PACA, whereas the resonance at δ 4.16 ppm is assigned to the ethylene bridge protons on PEDOT (Figure 2). The comparison of the resonances of PACA:PEDOT reveals a resulting ratio of 6:1. Additionally, X-ray photoelectron spectroscopy (XPS) analysis was conducted and reveals the content of the elements C, O, N, S, and Cl atoms, see table 1.

**Table 1. Content of elements in PACA-PEDOT.**

| Element | Content (%) |
|---|---|
| C | 66 |
| O | 21 |
| S | 8 |
| N | 2 |
| Cl | 3 |

XPS clearly shows the presence of predominant C 1s peak at around 284.8 eV, a pronounced peak from O 1s near 532 eV, and a N 1s peak located at about 400 eV. Also, two transitions corresponding to two chemical states of S 2p and Cl 2p are also found. The atomic concentrations from C, O, N, S, and Cl are found to be 60%, 21%, 2%, 8%, and 3%, respectively.

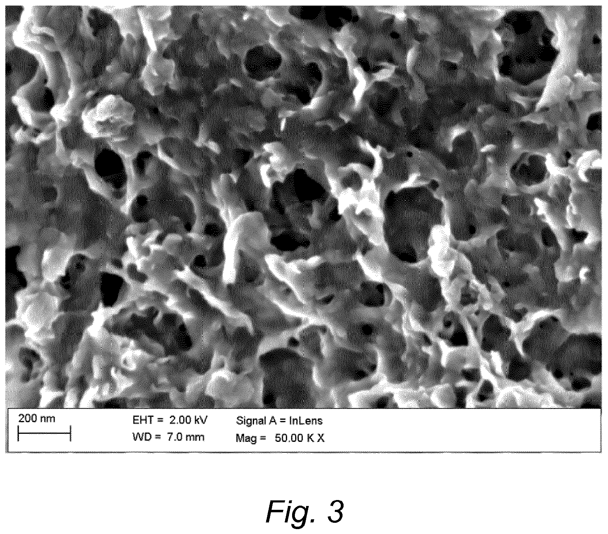

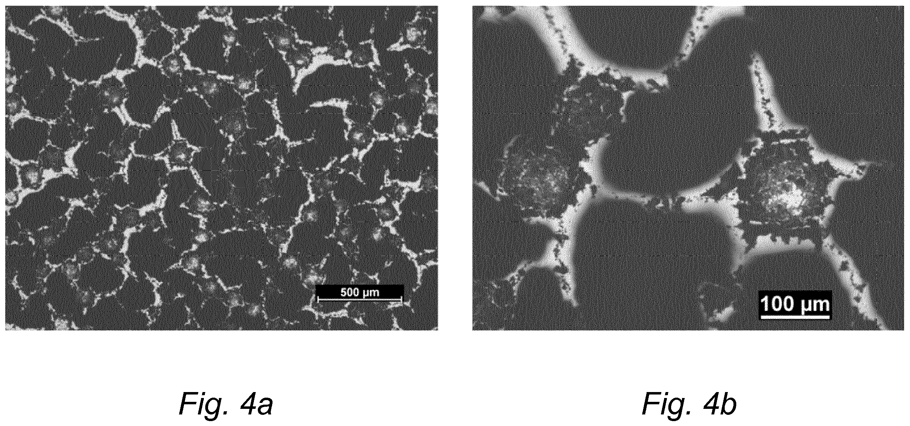

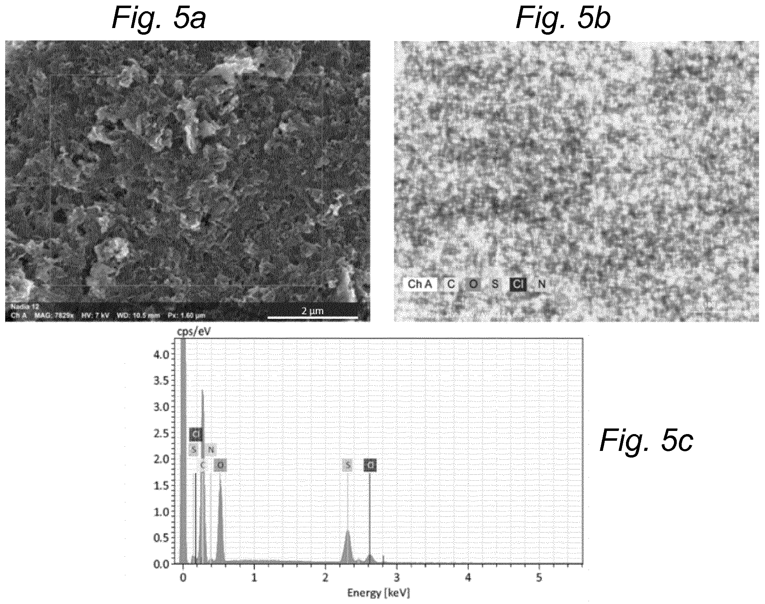

The morphology of drop-casted PACA-PEDOT is characterized by scanning electron microscopy (SEM) (Figure 3) and Energy Dispersive X-ray Spectroscopy (EDX) (Figure 5a-c). SEM images show aggregated microparticles in agreement with optical microscopy images (Figures 4a and b) of drop casted PACA-PEDOT. More importantly, SEM unveils a rough and extended microporous polymeric PACA-PEDOT matrix. A high internal surface area and microstructure promote fast combined ion-electron charge transport within the redox-active material. EDX confirms, in conjunction with SEM images, a successful complexation of PACA-PEDOT (Figure 5a-c) by revealing the homogenous presence of S, CI, and N throughout the drop-casted material. Thus, these imaging and spectroscopy results indicate successful synthesis of PACA-PEDOT polymer.

We have also characterized spray-coated PACA-PEDOT films from the view of electrical performance. The average sheet resistance is 497 kΩ/sq. Thermoelectric measurements have also been realized in order to determine the Seebeck coefficent (S), which allows us to distinguish the electronic nand p-type nature of the material. The positive Seebeck coefficient measured (S = 4.45 µV/K) indicates that the positive current is relatively higher than the negative contribution from the hot to the cold contact sides. Hence, we then conclude that spray-coated PACA-PEDOT layers appears primarily as a p-type material at room temperature.

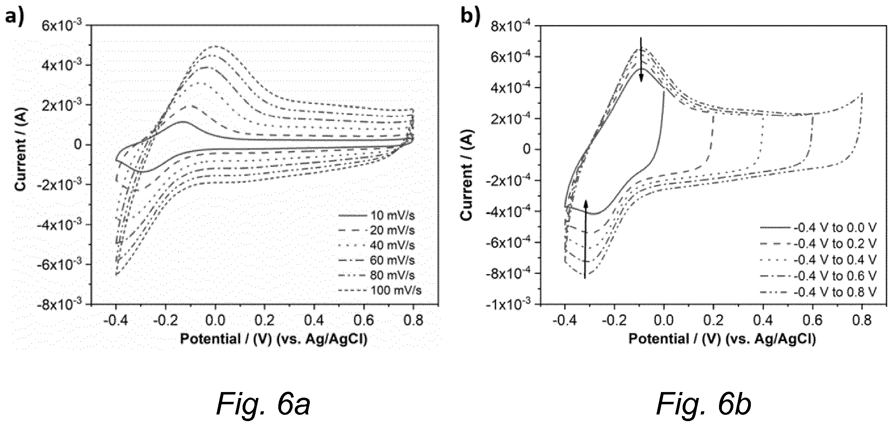

The electrochemical performance of this hybrid polymer electrode was evaluated by utilizing cyclic voltammetry (CV) and galvanostatic charge-discharge cycling using a three-electrode cell configuration performed in an aqueous electrolyte solution (0.1 M perchloric acid). CVs of PACA-PEDOT (Figure 6a) at different scan rates (from 10 to 100 mV s⁻¹) in the potential range of -0.4 to 0.8 V show very distinct oxidation and reduction peaks at negative and positive potentials. At negative potentials, from -0.4 to 0 V, the reversible oxidation and reduction peaks are attributed to Faradaic processes of the quinone moieties of PACA whereas the capacitive character at positive potentials, from 0 to 0.8 V, is due to PEDOT. The peak current increases linearly with the scan rate, which suggests that current evolution is governed by they show surface confined behavior. Interestingly, the large capacitive effect of the PEDOT phase and the reversible Faradaic process inherent to PACA strongly depend on the variation of the potential window applied (Figure 6b). This may suggest that an extended access to the aminoanthraquinone redox sites is established as PEDOT provides a relatively more conductive pathway, when higher positive potentials are applied. This then promotes faster and higher density of electron transfer within the material. Conversely, the quinone/hydroquinone becomes relatively more trapped within the reduced hydroquinone estate as the PEDOT backbone becomes less conductive when the potential window is narrowed. This then decreases the electron transfer pathways between PEDOT and PACA.

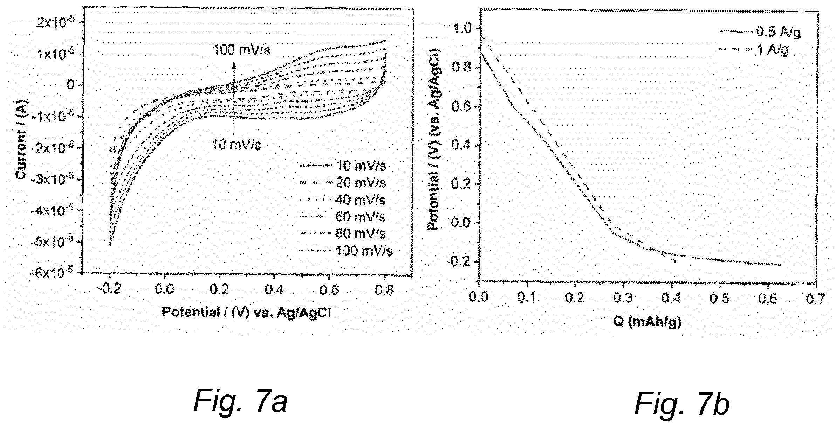

A significant difference is observed in the CV characteristics performed on only the PACA material (Figures 7a-b), which then displays a more resistive behaviour, thus proving the low conductivity of this conjugated redox polymer. Hence, the electrochemical response of PACA reinforces that improved access to quinones is obtained by polymerizing and amalgamating PEDOT with PACA.

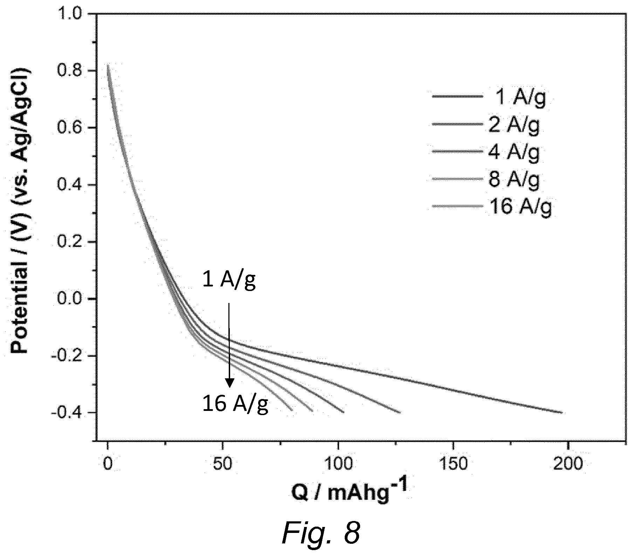

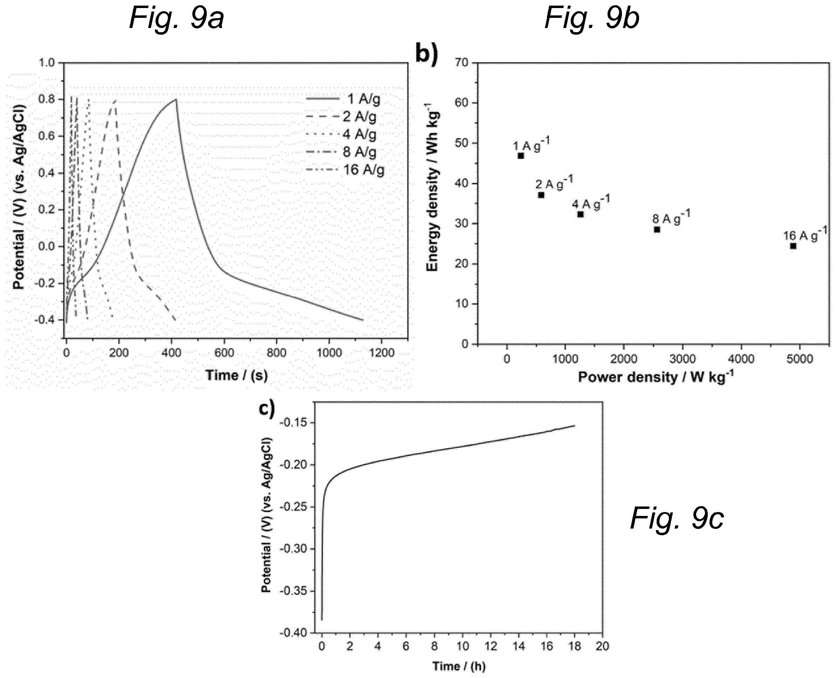

The fundamental charge-storage performance of PACA-PEDOT is further analyzed with galvanostatic charge-discharge analysis by applying different current rates, ranging from 1 A g⁻¹ to 16 A g⁻¹ (Figure 8, with respect to the weight of active electrode material). The two different slopes recorded confirms a change in the charge-storage mechanisms by fully utilizing the pseudo-capacitive redox processes of the composite material sysem. The specific capacitances of the supercapacitor electrodes are calculated from the slope of the discharge curves (Figure 9a), then obtaining a specific capacitance value of 594 F g⁻¹ at 1 A g⁻¹. This value is in fact greater than the values reported in literature for comparable hybrid polymer materials. The porous morphology is favorable for rapid redox-charging due to the relatively higher surface area which then contributes to a higher resulting specific capacitance. This is in agreement with the slight decrease of charge capacity as the current rate increases, indicating that this electrode material holds high rate capability. We further investigated the Ragone plots, which compares the energy and power densities of the hybrid polymer, see Figure 9b. PACA-PEDOT exhibited an energy density in the range of 46.8-24.4 Wh/kg and a power density ranging from 237.6 to 4887.6 W/kg, as the current rate increases from 1 to 16 A g⁻¹. The energy density decreases with the increase of power density.

Self-discharge is certainly always of fundamental interest in describing the behaviour of electrochemical charge storage electrodes, because it involves progressive and time-dependent loss of charge that is signified by a decrease in potential over time. Self-discharge of PACA-PEDOT was measured by monitoring the open circuit voltage for 18 h under inert atmosphere, after charging to a potential of -0.4 V. As shown in Figure 9c, the hybrid polymer electrode undergoes a relatively fast initial self-discharging process, during the first two hours at open circuit conditions. Afterwards, the change in open-circuit potential remains constant (linear decay) during the following hours without any sign of transient decrease.

The novel π-conjugated redox hybrid polymer system, based on PEDOT and the polyaminoanthraquinone derivative, PACA, has been synthesized via a straightforward oxidative polymerization protocol. This process results in a water dispersible electrode material system suitable for electrical charge storage technologies. The incorporation of PACA into the PEDOT polymer matrix results in a microporous and well complexed polymer material system. These features are favourable for the combined rapid redox charging and high charge storage capacity, features that outperform the properties of the pristine electroactive polymers examined separately. Cyclic voltammetry and galvanostatic charge-discharge measurements clearly reveal the synergistic effects between the versatility of the quinone groups in PACA allowing high amount of electric charge storage via Faradaic reactions and PEDOT serving as an electronic conductor allowing the easy access to the abundant redox-active sites. Our PACA-PEDOT polymer shows a specific capacitance as high as 594 F g⁻¹ and charging capacities of 198 mA h g⁻¹. Thus, the superior electrochemical performance of this organic hybrid electrode makes it a valuable and very promising candidate as the electrode in energy storage devices. Relevant properties for an exemplary electrode of the inventive conducting hybrid polymer are shown in Table 2.

**Table 2. Charge capacity, specific capacitance, power and energy densities values for different current densities from 1 to 16 A g⁻¹.**

| **Current rate (A/g)** | | **Charge (mAh/g)** | | **Specific Capacitance (F/g)** | | **Power density (W/Kg)** | | **Energy density (Wh/Kg)** | |
|---|---|---|---|---|---|---|---|---|---|
| | 1 | | 198 | | 594 | | 237.6 | | 46.8 |
| | 2 | | 127 | | 381 | | 585.4 | | 37.1 |
| | 4 | | 102 | | 306 | | 1262.7 | | 32.3 |
| | 8 | | 90 | | 270 | | 2564.2 | | 28.5 |
| | 16 | | 80 | | 240 | | 4887.6 | | 24.4 |

## Claims

1. A conducting hybrid polymer material comprising a mixture of
- poly(1-amino-5-chloroanthraquinone) (PACA); and
- poly(3,4-ethylenedioxythiophene) (PEDOT);
wherein the ratio of PACA to PEDOT in said mixture is at least 4 to 1, as calculated based on measurements by ¹H NMR.

2. The conducting hybrid polymer material according to claim 1, wherein said hybrid polymer material comprises a homogenous distribution of sulfur, chloride and nitrogen throughout the material.

3. The conduction hybrid polymer according to claim 1 or 2, wherein the conducting hybrid polymer comprises micropores.

4. The conducting hybrid polymer composite material according to any one of claims 1-3, wherein said polymer composite material has a specific capacitance of at least 550 F/g, such as in the range of 550-650 F/g.

5. The conducting hybrid polymer composite material according to any one of claims 1-4, wherein the ratio of PACA to PEDOT is in the range of 5-7 to 1, such as around 6 to 1, as calculated based on measurements by ¹H NMR.

6. An electrode material comprising the conducting hybrid polymer material of any one of claims 1-5.

7. A process for producing a conducting hybrid polymer material comprising a mixture of poly(1-amino-5-chloroanthraquinone) and poly(3,4-ethylenedioxythiophene), said process comprising
a) providing 1-amino-5- chloroanthraquinone monomer;
b) polymerizing said 1-amino-5- chloroanthraquinone monomer, to form poly(1-amino-5-chloroanthraquinone);
c) providing 3,4-ethylenedioxythiophene monomer;
d) polymerizing said 3,4-ethylenedioxythiophene in the presence of said poly(1-amino-5-chloroanthraquinone), thereby forming a conducting hybrid polymer material comprising a mixture of poly(1-amino-5-chloroanthraquinone) and poly(3,4-ethylenedioxythiophene).

8. The process according to claim 7, wherein the polymerizing in b) is performed in the presence of an oxidant.

9. The process according to claim 8, wherein the oxidant is a alkali metal chromate, such as potassium chromate.

10. The process according to any one of claims 7 to 9, wherein the polymerizing in d) is performed in the presence of a metal chloride catalyst and an oxidant.

11. The process according to claim 10, wherein the oxidant is an alkali metal persulfate, such as sodium persulfate.

12. The process according to claim 10 or 11, wherein the metal chloride catalyst is iron(III)chloride.

13. The process according to any one of the preceding claims, wherein the process further comprises
e) isolating the polymer composite material.

14. The process according to claim 13, wherein the step e) is performed by centrifugation.

15. The process according to any one of claims 7-14, wherein the step b) is performed in the presence of an aqueous acid solution.

## Patentansprüche

1. Leitendes Hybridpolymermaterial, umfassend eine Mischung von
- Poly(1-amino-5-chloranthrachinon) (PACA); und
- Poly(3,4-ethylendioxythiophen) (PEDOT);
wobei das Verhältnis von PACA zu PEDOT in der Mischung mindestens 4 zu 1 beträgt, wie auf der Basis von ¹H-NMR-Messungen berechnet.

2. Leitendes Hybridpolymermaterial nach Anspruch 1, wobei das Hybridpolymermaterial eine homogene Verteilung von Schwefel, Chlor und Stickstoff in dem gesamten Material umfasst.

3. Leitendes Hybridpolymermaterial nach Anspruch 1 oder 2, wobei das leitende Hybridpolymermaterial Mikroporen umfasst.

4. Leitendes Hybridpolymerverbundmaterial nach einem der Ansprüche 1-3, wobei das Polymerverbundmaterial eine spezifische Kapazität von mindestens 550 F/g, wie im Bereich von 550-650 F/g, aufweist.

5. Leitendes Hybridpolymerverbundmaterial nach einem der Ansprüche 1-4, wobei das Verhältnis von PACA zu PEDOT im Bereich von 5-7 zu 1, wie etwa 6 zu 1, liegt, wie auf der Basis von ¹H-NMR-Messungen berechnet.

6. Elektrodenmaterial, umfassend das leitende Hybridpolymermaterial nach einem der Ansprüche 1-5.

7. Verfahren zur Herstellung eines leitenden Hybridpolymermaterials, das eine Mischung von Poly(1-amino-5-chloranthrachinon) und Poly(3,4-ethylen-dioxythiophen) umfasst, wobei das Verfahren Folgendes umfasst:
a) Bereitstellen von 1-Amino-5-chloranthrachinon-Monomer;
b) Polymerisieren des 1-Amino-5-chloranthrachinon-Monomers zur Bildung von Poly(1-amino-5-chloranthrachinon);
c) Bereitstellen von 3,4-Ethylendioxythiophen-Monomer;
d) Polymerisieren des 3,4-Ethylendioxythiophens in Gegenwart des Poly(1-amino-5-chloranthrachinon)s zur Bildung eines leitenden Hybridpolymermaterials, das eine Mischung von Poly(1-amino-5-chloranthrachinon) und Poly(3,4-ethylendioxy-thiophen) umfasst.

8. Verfahren nach Anspruch 7, wobei das Polymerisieren in b) in Gegenwart eines Oxidationsmittels durchgeführt wird.

9. Verfahren nach Anspruch 8, wobei es sich bei dem Oxidationsmittel um ein Alkalimetallchromat, wie Kaliumchromat, handelt.

10. Verfahren nach einem der Ansprüche 7 bis 9, wobei das Polymerisieren in d) in Gegenwart eines Metallchlorid-Katalysators und eines Oxidationsmittels durchgeführt wird.

11. Verfahren nach Anspruch 10, wobei es sich bei dem Oxidationsmittel um ein Alkalimetallpersulfat, wie Natriumpersulfat, handelt.

12. Verfahren nach Anspruch 10 oder 11, wobei es sich bei dem Metallchlorid-Katalysator um Eisen(III)-chlorid handelt.

13. Verfahren nach einem der vorhergehenden Ansprüche, wobei das Verfahren ferner Folgendes umfasst: e) Isolieren des Polymerverbundmaterials.

14. Verfahren nach Anspruch 13, wobei der Schritt e) durch Zentrifugation durchgeführt wird.

15. Verfahren nach einem der Ansprüche 7-14, wobei der Schritt b) in Gegenwart einer wässrigen Säurelösung durchgeführt wird.

## Revendications

1. Matériau polymère hybride conducteur comprenant un mélange de
- poly(1-amino-5-chloroanthraquinone) (PACA); et
- poly(3,4-éthylènedioxythiophène) (PEDOT);
le rapport de PACA sur PEDOT dans ledit mélange étant d'au moins 4 sur 1, tel que calculé sur la base de mesures par RMN ¹H.

2. Matériau polymère hybride conducteur selon la revendication 1, ledit matériau polymère hybride comprenant une distribution homogène de soufre, de chlorure et d'azote dans tout le matériau.

3. Polymère hybride de conduction selon la revendication 1 ou 2, le polymère hybride conducteur comprenant des micropores.

4. Matériau composite polymère hybride conducteur selon l'une quelconque des revendications 1 à 3, ledit matériau composite polymère possédant une capacitance spécifique d'au moins 550 F/g, telle que dans la plage de 550 à 650 F/g.

5. Matériau composite polymère hybride conducteur selon l'une quelconque des revendications 1 à 4, le rapport de PACA sur PEDOT étant dans la plage de 5 à 7 sur 1, tel que d'environ 6 sur 1, tel que calculé sur la base de mesures par RMN ¹H.

6. Matériau d'électrodes comprenant le matériau polymère hybride conducteur selon l'une quelconque des revendications 1 à 5.

7. Procédé pour la production d'un matériau polymère hybride conducteur comprenant un mélange de poly(1-amino-5-chloroanthraquinone) et de poly(3,4-éthylènedioxythiophène), ledit procédé comprenant
a) la mise à disposition de monomère de 1-amino-5-chloroanthraquinone;
b) la polymérisation dudit monomère de 1-amino-5-chloroanthraquinone, pour former un poly(1-amino-5-chloroanthraquinone) ;
c) la mise à disposition de monomère de 3,4-éthylènedioxythiophène;
d) la polymérisation dudit 3,4-éthylènedioxythiophène en la présence dudit poly(1-amino-5-chloroanthraquinone), formant ainsi un matériau polymère hybride conducteur comprenant un mélange de poly(1-amino-5-chloroanthraquinone) et de poly(3,4-éthylènedioxythiophène).

8. Procédé selon la revendication 7, la polymérisation en b) étant réalisée en la présence d'un oxydant.

9. Procédé selon la revendication 8, l'oxydant étant un chromate de métal alcalin, tel que le chromate de potassium.

10. Procédé selon l'une quelconque des revendications 7 à 9, la polymérisation en d) étant réalisée en la présence d'un catalyseur de type chlorure métallique et d'un oxydant.

11. Procédé selon la revendication 10, l'oxydant étant un persulfate de métal alcalin, tel que le persulfate de sodium.

12. Procédé selon la revendication 10 ou 11, le catalyseur de type chlorure métallique étant le chlorure de fer(III).

13. Procédé selon l'une quelconque des revendications précédentes, le procédé comprenant en outre e) l'isolement du matériau composite polymère.

14. Procédé selon la revendication 13, l'étape e) étant réalisée par centrifugation.

15. Procédé selon l'une quelconque des revendications 7 à 14, l'étape b) étant réalisée en la présence d'une solution aqueuse d'acide.
